# EUROPEAN PATENT SPECIFICATION

(11) **EP 2 726 224 B1**
(45) Date of publication and mention of the grant of the patent: **10.02.2016**
(21) Application number: 12743774.7
(22) Date of filing: 29.06.2012
(51) Int. Cl.: B09C 1/02, B09C 1/08, B09C 1/10

(54) **METHOD OF PURIFYING SOIL THROUGH HEAP PERCOLATION**
VERFAHREN ZUR REINIGUNG VON BÖDEN
MÉTHODE POUR PURIFIER UN SOL CONTAMINÉ

(30) Priority: 01.07.2011 WO PCT/IB2011/052919
(43) Date of publication of application: 07.05.2014
(73) Proprietor: Cleanfield Danmark ApS, 2820 Gentofte (DK)
(72) Inventor: PERMILD, Erik, DK-2900 Hellerup (DK)
(74) Representative: Høiberg A/S
(86) International application number: PCT/IB2012/053320
(87) International publication number: WO 2013/005148

(56) References cited:
- DE-A1- 4 412 596
- US-A- 5 660 613
- NEUMAIER HERMANN ED - NEUMAIER HERMANN: "ALTLASTEN - Erkennen, Bewerten, Sanieren, Biologische Verfahren", 31 December 1996 (1996-12-31), ALTLASTEN : ERKENNEN, BEWERTEN, SANIEREN, SPRINGER, BERLIN, PAGE(S) 381 - 410, XP002638561, ISBN: 978-3-540-59316-4 page 381, line 24 - page 410, line 34

## Description

### Field of invention

The present invention relates to a method of purifying contaminated soil on-site which does not require the contaminated soil to be removed from the original location.

### Background of invention

Contaminated soil is a world-wide problem. The contamination may range from small localized contaminations to large widespread and hard to treat contaminations. Sites where for example factories and gas stations have been placed are frequently contaminated in a degree, which requires purification of the soil.

The contaminations can be of various kinds e.g. hydrocarbons, chlorinated solvents, polar solvents and pesticides, which all influences the living conditions for plants, animals and microorganisms living in the soil of the contaminated site, whereby that site could be deemed unfit for normal use due to the degree of contamination.

Contaminated sites thus constitute a serious economic problem for the proprietors of the contaminated soil and for society. Many attempts to solve the problem with contaminated soil have accordingly been tried over the years.

Several different methods of cleaning contaminated soil have been provided over the years.

US 2008/0101868 describes a bioventing method, which creates a bacterial treatment zone at a contaminated site by supplying a hydrocarbon source to the treatment zone and recirculating the hydrocarbon to said zone.

This known method requires however a costly apparatus and is furthermore time consuming and strenuous to perform.

The Canadian patent application no. 2091079 discloses a method for washing contaminated soil, by removing the contaminated soil from the contaminated site and placing it in a skimming tank where a water-based surfactant is used to separate contaminants from soil particles. The soil is, after removing the water mixture from the soil particles, returned to the site while the mixture is processed through an oil/water separator.

The process of removing the water from the soil particles is slow and doubtful, and the apparatus for performing the process has moreover a low capacity.

From US 5 885 203 a generic remediation process is known showing the preamble of claim 1.

Accordingly there is a heed for an improved method, which is simple, easy to use and affordable with high efficacy and a good result.

The novel and unique features of the invention consists in the fact that the present invention provides for a fast, cost effective and reliable purification of contaminated soil by combination of a first and second network of pipes and a BioBox^{™}. The purification system of the present invention is furthermore in one embodiment portable so that on-site purification is possible.

### Summary of invention

The present invention relates to a biological system utilizing an enriched agent for purifying contaminated soil. In one embodiment this enriched agent comprises bacteria useful in the purification process. While the bacteria are working to purify the contaminated soil, the purifying process is monitored and further enriched agent is added during the process.

The present invention describes a process by which the treatment plant may be operated from a distance, making it possible to control several treatment plants from the same central site.

Using the technology of the present invention it is also possible to purify contaminated soil on-site without removing the contaminated soil from its original location. This is particularly useful where the contaminated soil is located below large buildings and accordingly cannot be moved without removing the building, or in other situations were removal of the contaminated soil from the site is inconvenient for one reason or another.

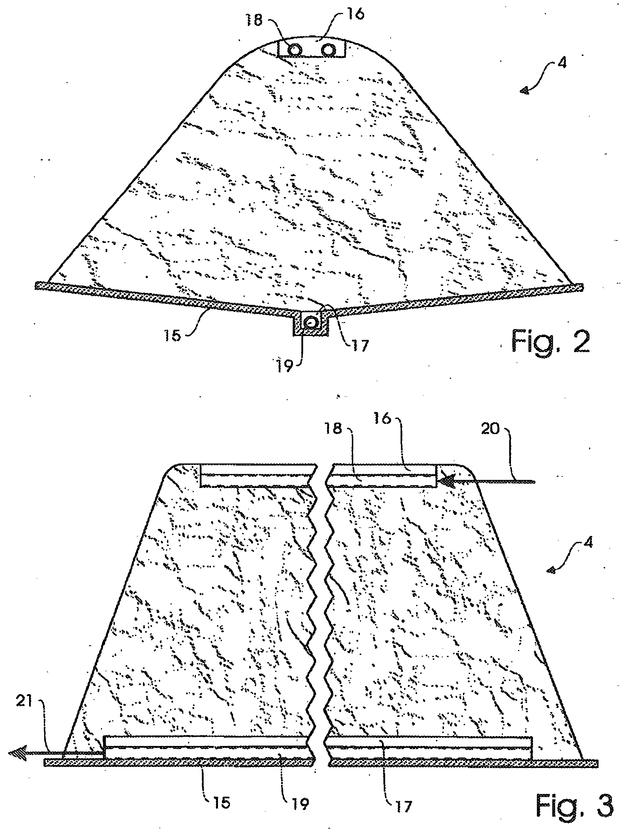

Contaminated soil may be purified by contacting the contaminated soil with an enriched agent containing agents which are able to eliminate the contaminants. In one embodiment of the invention the contaminated soil is removed from the contaminated site and placed on a treatment plant arranged in piles. In these piles a first network of pipes are located at the top of the piles in the full length making it possible to send enriched agent through these piles in order to remove the contaminants from the soil. The enriched agent is allowed to percolate down through the contaminated soil. The percolate is collected by a second network of pipes arranged at the bottom of the piles in the full length of the piles (see figure 2 and 3). The percolate may then be analysed and re-used.
The first and second networks of pipes are connected to and the flow-through is controlled by the Bio-Box^{™} described herein below.

In another embodiment of the present invention the contaminated soil is purified on-site using a portable system of pipes useful for sending the enriched agent through the contaminated soil and collecting the flow-through in a second set of portable pipes for further analysis and use.

Accordingly, in both of these systems the enriched agent used to flow-through the piles may be re-circulated through the piles/on-site contamined soil in that way also making the method very cost effective.

### Description of Drawings

Fig. 1 is a schematically view seen from above of a plant according to the invention for purifying contaminated soil formed as piles placed on a treating place.
Fig. 2 is a lateral cross section of one of the piles shown in fig. 1.
Fig. 3 is a fragmentarily shown longitudinal section of the pile shown in fig. 2.
Fig. 4 is a diagram illustrating a first embodiment of the plant.
Fig. 5 is a diagram illustrating a second embodiment of the plant.
Fig. 6 is a diagram illustrating a third embodiment of the plant.

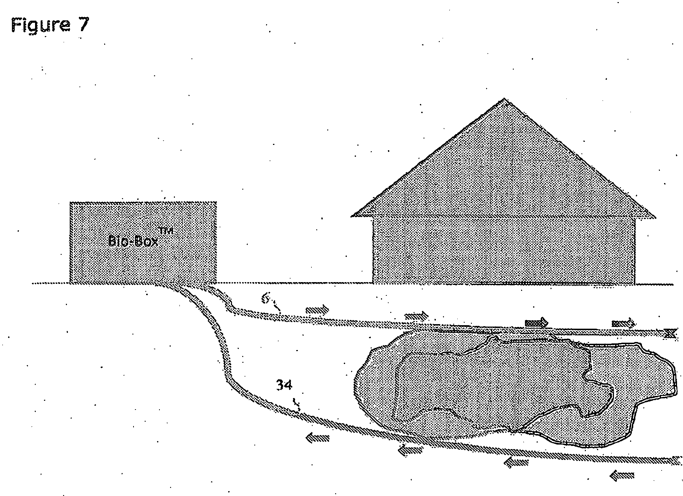

Fig. 7 is a schematic diagram of an on-site purification situation
Fig. 8 is a schematic diagram of the components of the Bio-Box^{™}, PLC, the contaminated soil and the first and second network of pipes (one unit). This unit may exist in many copies (n copies) on different locations all controlled from the central control unit.

### Detailed description of the invention

The present invention relates to purification of contaminated soil. "Soil" within the meaning of the present invention includes all the different mineral types of earth or dirt, comprising sand, silt and clay. Different soil types included in the present invention is accordingly without limitations, clay, sandy clay, silty clay, clay loam, silty clay loam, sandy clay loam, loam, silt loam, silt, sandy loam, laomy sand and sand.

The present invention relates to a treatment plant where contaminated soil may be purified in a simple and inexpensive manner. The treatment plant allows easy and quick purification of large quantities of contaminated soil, in a reliable and uniform manner.
The present invention also describes a process by which the treatment plant may be operated from a distance, making it possible to control several treatment plants form the same central site.

Using the technology of the present invention it is also possible to purify contaminated soil on-site without removing the contaminated soil from its original location. This is particularly useful where the contaminated soil is located below large buildings and accordingly cannot be moved without removing the building, or in other situations were removal of the contaminated soil from the site is inconvenient for one reason or another.

### Bio-Box^{™}

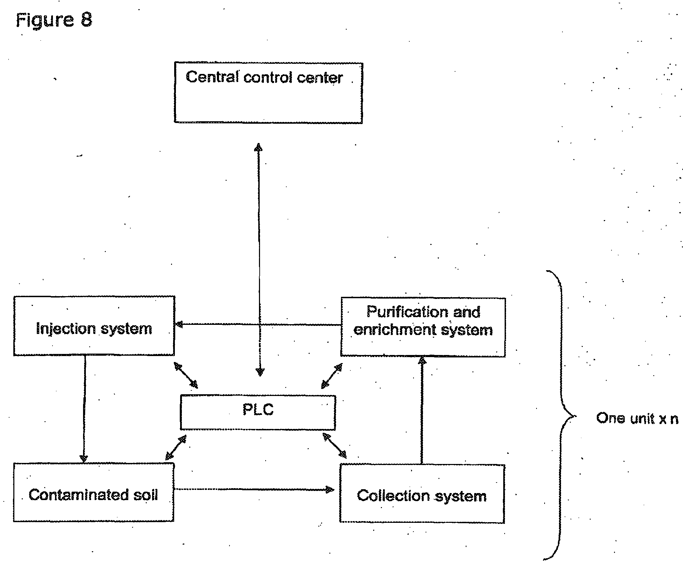

The central element of the present invention is the Bio-Box^{™}. The Bio-Box^{™} is a central unit which may in one embodiment be used for controlling the first and second network of pipes. The supply of enriched agent used in the purification process and the composition of said enriched agent may also be controlled by the Bio-Box^{™}. The Bio-Box^{™} system comprises 4 different parts combined in one or more suitable housing units (figure 8).
The four parts are:
1) An injection system
2) A collection system
3) A purification and enrichment system
4) A Programmable Logic Controller

### Injection system

The injection system holds the enriched agent used in the purification. The injection system comprises at least 2 holding containers of at least 1 m³. The holding containers are connected through a pipe system and may accordingly hold at least 2 m³ enriched agent.
Each holding container is equipped with a level meter, which is connected to a Programmable Logic Controller (PLC).
The holding containers of the injection system are connected to the individual piles and/or the on-site contamination through a first network of pipes. The PLC controls the valves present in the first network of pipes.

The enriched agent comprises water, nutrients, oxygen, detergent, enzymes and/or bacteria in a predetermined mixture particularly suitable for the contamination found in the soil to be purified. Any additional components relevant may be added to the enriched agent. A given combination of components is made specifically to be used in one pile of contaminated soil, with a specific type of contamination. As the purification process progresses the combination of components used for a given pile may change. The specific mixture needed in a given situation is determined and mixed in the purification and enrichment system described herein below.

The skilled person will know which elements is required in an enriched agent for a given contaminated soil at a given time point in the purification process. According to the present invention the purification process in continually monitored and based on this information the enriched agent is composed. As described herein above the present invention utilizes bacteria in the purification process and the skilled person knows how to evaluate the need for additional nutrients, water and the like in order to ensure sufficient growth of the bacteria.
The PLC is programmed with a number of different pre-programmed protocols, which may be used in the analysis and resulting composition of a new enriched agent. The skilled person will know when these protocols should be altered and how to alter them.

### Collection system

After the enriched agent has been injected through a first network of pipes to the top of the piles/top of contaminated on site soil, the enriched agent is allowed to percolate down through the piles/contaminated soil as also described herein above.

A second network of pipes are located at the bottom of the piles/contaminated soil and aids in collection of the percolate. This second network of pipes may in one embodiment be connected to a vacuum pump. The PLC controls the valves of the second network. In one embodiment the contaminated soil is placed in piles and in one embodiment these piles are placed on a base, which is impermeable to the agent. Such a base may aid in the collection of the percolate, which are then lead to a collection pond. From the collection pond the water is pumped to a buffer container and on to a system for removing the hydrocarbons from the percolate.
In one embodiment a BioKube^{™} is used, in which the percolate is purified by removal of hydrocarbons and oxygen is added. After the removal of hydrocarbons the resulting water is lead to the holding containers described herein above in the section "Injection system".

### Purification and enrichment system

The purification and enrichment system comprises a system for removing hydrocarbons from the percolate (such as in one embodiment a BioKube^{™}) and one or more holding containers in which nutrients, bacteria, oxygen, detergents and enzymes are mixed with the water. Accordingly the percolate is lead through a system removing hydrocarbons, on to a collection pond. Tap water may be added to the water from the collection pond.

### Water

The method of the present invention utilizes an enriched agent for the purification of contaminated soil. The contaminated soil may be placed in piles as described herein below in the section "Purification of contaminated soil at treatment plant" or the purification may take place on site as described herein below in the section "On Site purification of contaminated soil".
The enriched agent in one embodiment comprises water which is enriched. This water may in one embodiment advantageously be contained in a water tank and subsequently being enriched by introducing purifying agents from a plurality of sources to the water in the water tank.
Accordingly the water tank and the container(s) holding the purifying agents may be interconnected with pipes in their own circuit. The pipes are equipped with valves which may be controlled manually or by a Programmable Logic Controller programmed to control the circuit.

In one embodiment, the enriched agent can be circulated through the piles more than one time, such that the enriched agent is being reused.

The water used may be purified percolate from a first round of purification and/or purified rain water collected in a suitable container or natural or man-made reservoir (e.g. a small pond or the like). The purified percolate and/or rain water may be supplemented with tap water. In that way the water is re-circulated and thus a minimal amount of new water needs to be added once the purification process in running, minimising the resources required.

### Nutrients

The enrichment of the agent is in one embodiment done by adding relevant nutrients to the water. The nutrients are added after a predetermined protocol. The nutrients are added in order to secure sufficient nutrient level for the bacteria present in the contaminated soil and/or enriched agent.
The amount of nutrients and the composition of nutrient added to the enriched agent may change over time as purification process in a given pile progresses.

In one embodiment the enriched agent is reused and in this embodiment the level of nutrients is measured in the collected agent and the amount of nutrients needed is accordingly determined and subsequently added.

The nutrients may be selected from the group consisting of: nitrogen, phosphorous and potassium.
In one embodiment the nutrients are added as pre-prepared cocktails available for commercial sale, such as Bi-Chem® Accelerators (Novozymes A/S).

### Oxygen

The oxygen level in the enriched agent should be held between 70-200 ppm O₂, such as between 80-200 ppm O₂, for example 90-180 ppm O₂, such as between 90-150 ppm O₂. The needed amount of oxygen will vary depending on the type of contaminated soil which are purified.

In one embodiment the enriched agent is reused and in this embodiment the level of oxygen is measured in the collected water and the amount of oxygen needed is accordingly determined and subsequently added.

### Bacteria

The enriched agent may in one embodiment contain relevant bacteria. Depending on the contamination present in the contaminated soil, different bacteria may be added to the enriched agent in order to facilitate faster purification of the soil.

The bacteria for use according to the present invention may in one embodiment be selected from the group consisting of: *Rhodoccus erytropolis, Pseudomonas putida, Pseudomonas fluorescens, Arthrobacter* and *Sphingomonas.*

In another embodiment the bacteria may be selected from the group consisting of: *Rhodoccus erytropolis, Pseudomonas putida, Pseudomonas fluorescens.*

In one embodiment the bacteria are added as pre-prepared cocktails available for commercial sale, such as ABR® Hydrocarbon Blend and/or ABR® Casoline Blend (both available from Novozymes A/S).

In one embodiment the bacteria already present in the contaminated soil is identified and utilized in the purification process. Additional bacteria of the same or a different strain may be added to the enriched agent any time during the purification process.

In one embodiment the enriched agent is reused and in this embodiment the level of bacteria is measured in the collected agent and the amount of bacteria needed is accordingly determined and subsequently added.
During a purification process the dominating contamination may change over time and accordingly different bacteria may be needed at different time points during the purification process.
The skilled person will know which bacteria are relevant to add to the enriched agent at a given time point in connection with a given contamination type.

### Enzymes

The enriched agent may in one embodiment contain relevant enzymes. Depending on the contamination present in the contaminated soil, different enzymes may be added to the enriched agent in order to facilitate faster purification of the soil.

The enzymes for use according to the present invention may in one embodiment be selected from the group consisting of: proteases, amylases and lipases.

In one embodiment the enriched agent is reused and in this embodiment the level of enzymes is measured in the collected agent and the amount of enzymes needed is accordingly determined and subsequently added.
During a purification process the dominating contamination may change over time and accordingly different enzymes may be needed at different time points during the purification process.
The skilled person will know which enzymes are relevant to add to the enriched agent at a given time point in connection with a given contamination type.

### Detergents

The enriched agent may in one embodiment contain relevant detergents. Depending on the contamination present in the contaminated soil, different detergents may be added to the enriched agent in order to facilitate faster purification of the soil.

The detergent for use according to the present invention may in one embodiment be selected from the group consisting of: cationic detergent, anionic detergent, non-ionic detergent and zwitterionic detergent.
During a purification process the dominating contamination may change over time and accordingly different detergents may be needed at different time points during the purification process.
The skilled person will know which detergents are relevant to add to the enriched agent at a given time point in connection with a given contamination type.

In one embodiment the detergent are added as pre-prepared cocktails available for commercial sale, such as Novo Surfclean C³ (available from Novozymes A/S).

### Programmable Logic Controller

The Programmable Logic Controller (PLC) comprises a computer, which are pre-programmed for the daily operation. Supervision of the operation may be done online via a network connection.
The PLC performs wireless control of the injection valves placed throughout the first and second network of pipes. The PLC also controls and monitors the pressure and flow in the system and operates the different pumps.
Data is automatically collected and treatment protocols and time points are stored in a data-log. This data-log is available directly from the PLC and through a network connection making it possible to access the data-log and control the PLC from a distance.
An alarm system is built into the whole system, so that feedback from every unit is given to the PLC. Accordingly, the PLC will be notified if for example a valve does not open or close properly. It will be possible to identify said valve on the PLC and subsequently easily identify and correct the problem.

In one embodiment the plant may be operated automatically by means of an operating system, which comprises instruments for measuring the different states of the different parts of the plant and generate signals to actuators for actuating the different valves. In a preferred embodiment the operating system comprises a computer with programs for operating the plant.

The communication between the plant and the computer can according to the invention be wireless.

In one embodiment the transmission of signals between the plant and the computer takes places via the Internet, whereby the considerable advantage is obtained that the plant can be operated with a limited amount of manpower and if desired from a distant central control center. This central control center could according to the invention be adapted to operate not only one but a number of similar plants which could be placed at a distance from each other. Accordingly several plants may be placed in the same country and moreover I different countries and even on different continents, and all those plants may be operated from the same control center (figure 8).

The different degree and type of contamination requires different composition of the enriched agent used in the purification process. The PLC is preprogrammed so that the most common types of contamination have a program for purification associated During the purification process the progress and status is monitored by sensors placed in the contaminated soil. In case of the contaminated soil being placed in piles the sensors are placed at the top of the piles evenly spaced in the whole length. In case on the contaminated soil being purified on-site the sensors are placed in the ground at the top of the contamination zone evenly spaced.

One set of sensors are present in each pile and/or in each on-site contamination site.

### Sensors

The sensors and measuring instruments used according to the present invention provides input to the Bio-Box^{™} at least once per day regarding the temperature in the pile, the humidity in the pile, the CO₂ content in the pile, the level of methane gas in the pile, the oxygen level in the pile and different Redox parameters present in the pile. These different parameters combined provide information regarding the progress of the purification process. The parameters are also relevant for evaluating the bacterial status in the soil and the living conditions present for the bacteria.
Based on this information the PLC are able to control the purification process and if necessary change the composition of the enriched agent needed for that given pile in which the given set of sensors are placed. The PLC is preprogrammed with data representing a specific identification number for each pile and linked to this number is information regarding the analyzed contaminations of said specific pile.

### Method of purifying contaminated soil

### Purification of contaminated soil at treatment plant

Contaminated soil may be purified by contacting the contaminated soil with an enriched agent, which are able to eliminate the contaminants.

In one embodiment of the invention the contaminated soil is removed from the contaminated site and placed on a treatment plant arranged in piles.
The term "pile" according to the invention means a quantity of soil formed as a unit with both a horizontal and vertical extension.

In these piles a first network of pipes are located at the top of the piles in the full length. Enriched agent is allowed to flow through this first network of pipes. Due to the vertical extension of the pile the releasing of the enriched agent flowing through the first network of pipes out into the soil of the pile will percolate downwards in the pile.

The agent percolating through these piles removes the contaminants from the soil. The percolate is collected by a second network of pipes arranged at the bottom of the piles in the full length of the piles (see figure 2 and 3). The percolate may then be analysed and re-used. The second network of pipes is connected to a vacuum pump facilitating the removal of the percolate from the second network of pipes to a collection pond and/or collection tank.

The first and second networks of pipes are connected to and the flow-through is controlled by the Bio-Box^{™} described herein below.

The treatment plant may be of any size, however in a preferred embodiment the treatment plant is large enough to hold several piles of contaminated soil. In principle there is no limit in the number of piles, which may be arranged according to the present invention.
In one embodiment the treatment plant contains 1-200 piles, such as 1-150 piles, for example 1-100 piles, such as 1-90 piles, for example 1-80 piles, such as 1-70 piles, for example 1-60 piles, such as 1-50 piles, for example 1-40 piles, such as piles, for example 1-20 piles, such as 1-10 piles.

The piles may be of any size relevant for the purification and in principle there is no limit in the size of the individual piles.
In one embodiment the pile contains 1.000-10.000 ton contaminates soil, such as 1.000-9.000 ton, for example 1.000-8.000 ton, such as 1.000-7.000 ton, for example 1.000-6.000 ton, such as 1.000-5.000 ton, for example 1.000-4.000 ton, such as 1.000-3.000 ton, for example 1.000-2.000 ton.

In order to prevent contaminations contained in the soil from percolating downwards to the ground water each of the piles may in one embodiment be placed on a base, which is impermeable to the water (see figure 2 and 3).

The percolate is continuously being collected and analysed in order to evaluate the progress of the purification process. Relevant information in relation to the progress of the purification process is the temperature in the pile, the humidity in the pile, the CO₂ content in the pile, the level of methane gas in the pile, the oxygen level in the pile and different Redox parameters present in the pile.
These different parameters combined provide information regarding the progress of the purification process. The parameters are also relevant for evaluating the bacterial status in the soil and the living conditions present for the bacteria.

### On-Site purification of contaminated soil

In the present invention the contaminated soil is purified on-site using a first network of portable pipes useful for sending the enriched agent through the contaminated soil and collecting the flow-through in a second network of portable pipes for further analysis and use. The second network of pipes is connected to a vacuum pump facilitating the removal of the percolate from the second network of pipes to a collection pond and/or collection tank.

The contamination in the soil is located by sampling the site using conventional soil sampling techniques. Once the contamination zone is located the first network of pipes are placed at top of the contamination zone, while the second network of pipes are located at the bottom of the contamination zone. The first and second networks of pipes are placed in the soil using horizontal directional drilling (HDD). This technology affords the ability to navigate a drill rod underground for extended distances at one time without disruption the property or other item located on top of the contaminated site making removal of the contaminated soil unwanted.
The purification principle is in general the same as described herein above in the section "Purification of contaminated soil at treatment plant". That is enriched agent is provided at the top of the contamination zone through a first network of pipes and a second network of pipes under vacuum are placed at the bottom of the contamination zone allowing collection of the percolate.

In one embodiment, this On-Site purification may be used for purification of the soil located beneath an oilwell rig. During drilling for oil in an oilwell drilling oil is used to cool and lubricate the drill on its way through the soil. This drilling oil is pumped to the surface of the ground and accordingly percolates into the soil beneath the oilwell rig. Accordingly, the soil beneath an oilwell rig is highly contaminated and for good reasons the oilwell rig cannot be moved.

Using the method of the invention the contaminated soil beneath the oilwell rig may be purified On-Site using the method mentioned herein above.

In another embodiment this on-site purification may be used for purification of the soil located beneath large buildings, such as factory or gas stations. The soil under such buildings is often contaminated to some degree and removal of the contaminated soil is not possible. The on-site purification described herein above may be used for purifying the soil.

The percolate is continuously being collected.

### Evaluation of measured parameters

The constant evaluation of the measured parameters provides information regarding the purification process and the bacterial content in the soil.
If the temperature falls below a predetermined level it may in one embodiment be an indicator of a drop in bacterial content in the soil. This may be remedied by adding additional and/or different bacteria to the enriched agent and/or by adding additional nutrients and oxygen to the enriched agent.

The measurement of CO₂, methane and Redox parameters also provides information regarding the bacterial status and the bacterial activity. If for example the CO₂ content falls below a predetermined level it may in one embodiment be an indicator of a drop in bacterial activity in the soil. Compared to and combined with the other parameters measured this provides information regarding whether the soil generally is suitable for bacterial survival or whether another or additional bacteria needs to be added to the enriched agent.

### Time aspect

The present invention provides for an easy and quick purification of contaminated soil, as compared to conventional methods of purifying contaminated soil.
The present invention relates to a quick method of purifying contaminated soil, in which the soil is purified in less than 2 years, more preferably in less than 20 months, such as in less than 15 months, more preferably in less than 12 months, such as in less than 10 months, more preferably in less than 8 months, such as in less than 6 months, more preferably in less than 4 months, such as in less than 2 months.

The conventional method of purifying contaminated soil in piles takes a very long time compared to the present method. Using the conventional method of purifying contaminated soil in piles it will take approximately 7 years to purify 2000 tons of soil contaminated with oil.
In one embodiment the present invention will purify the same amount and type of contaminated soil in less than 6 months.

### Contamination types

The contaminated soil according to the invention is soil containing in one embodiment hydrocarbons, chlorinated solvents, polar solvents and/or pesticides.

The purification process is different for different contaminants. According to the present invention the enriched agent is composed based on information regarding the contamination type. The development in the purification process is continually monitored as described herein above and a specific enriched agent is composed in order to meet the development in the purification process.

### Examples

As is evident many activities are needed for successfully operating the plant, e.g. are valves regulating different parts of the plant needed to be opened and closed at the correct time in dependence on physical and/or chemical states of different parts of the plant.

Such physical and/or chemical states may e.g. be the kind and extent of contaminations of the soil of each pile at a given moment, the pressure in the feeding and returning pipes of the circuits and the level of water in the tanks of the plant.

In a preferred embodiment the physical and/or chemical states can be measured by means of different measuring instruments, e.g. sensors and the like placed at the relevant locations in the piles and/or plant. Said measuring instruments can preferably be read from a display by an operator, which then manually can actuate the valves separately in agreement with the measuring results.

By way of example can be mentioned that measuring instruments can be placed in each of the piles for measuring the characteristic contamination of the soil of those pile whereby purifying agents are introduced into the water for purifying a specific pile in accordance with the measuring result received from the measuring-instruments placed in that pile. In this way the water can also be individually replenished in agreement with the contamination of the soil, and continuously be adjusted during the purification process.

According to the invention comprises the process in a preferred embodiment moreover the steps of providing a pre-programmed computer, providing instruments for measuring the physical and/or chemical states of the plant, providing actuators for performing the process, generating signals representing the measurements of the instruments, transmitting said signals as input to the computer, bringing the computer to compute and generate signals representing the operations to be performed for purifying the soil, and transmitting said signal as output to the actuators.

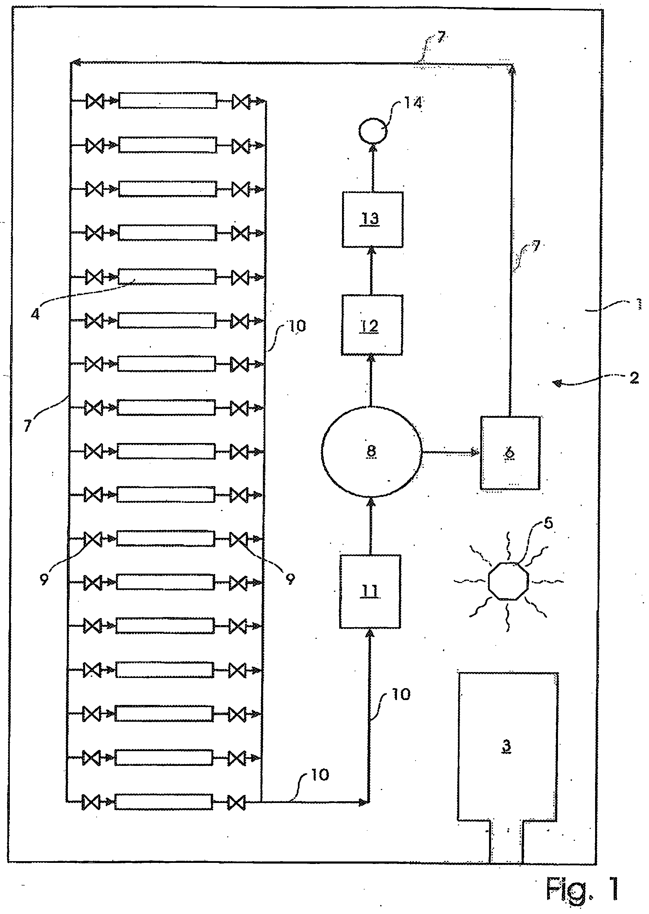

Fig. 1 shows a treating place 1 upon which the treating of the soil to be purified is carried out.

The contaminated soil, which may have come from a contaminated site, is received on a receiving station 3 where the soil is weighed, and e.g. stones and roots are sorted out.

The soil also may be analysed at the receiving station or in some cases already at the contaminated site.

Portions of soil in sizes of e.g. 3000 to 6.000 tons each are formed as piles 4 which each may have a length of about 100 meter, a width of about 8 meter and a height of about 4 meter.

On the treating place 1 is in this case shown 17 piles at all. The number of piles may in practice however be much larger, for example 50 to 100 piles.

The plant is monitored by means of a computer (PLC) 5 which in this case wireless communicates with the plant. In an expedient embodiment can the communicating take place via the Internet whereby the communicating can be performed in an inexpensive way and at a more or less large distant.

The computer is programmed with data representing a specific identification number for each pile and the characterized contaminations of said specific pile.

A circuit 6 of the plant comprises a feeding pipe 7 for feeding purifying water from a reservoir 8 of purifying water to the piles 4 via each their valves 9 and a return pipe 10 for returning the used purifying water to said reservoir of purifying water.

The computer is programmed in such way that it during operating of the plant gives signals to open only the valves 9 of one of the piles at a time and to simultaneously closing the remainder of the valves 9 of the piles.

That implies that only the pile in question is treated at a given moment. The time of treating said pile might e.g. be about 20 minutes a day after which the valves of the now treated pile are closed and the valves of the pile, which subsequently need mostly to be treated, are opened.

Measuring instruments (not shown in fig. 1) are placed in each pile for measuring the characteristic contamination of the soil of a respective pile.

Signals representing the measuring results are moreover generated and communicated to the computer, which accordingly gives signals back to open the valves of precisely that pile of soil, which now mostly need to be treated.

The soil can possibly contain organic impurities, which is removed by inserting a biological purification unit 11 in the return pipe 10 of the first hydraulic circuit 6 before the reservoir 8 of purifying water.

Excess purifying water in the reservoir of purifying water therefore is passing an oil separator 12 and a grit trap 13 before arriving at a sewer 14.

Water from a waterwork, (not seen in fig. 1), can moreover be added to the purifying water.

A pile 4 is in fig. 2 shown in a lateral cross section and in fig.3 fragmentarily in a longitudinal section.

The pile is placed upon a base 15 which is made of an impermeable material like asphalt for thereby preventing used and contaminated purifying water from percolating downwards to the ground water being used by the community to e.g. drinking water.

As seen in fig. 2 is the base sloping downwards against the centerline of the base for thereby securing that the purifying water safely stays on the base.

In the top of the pile is formed a top recess 16 and in the base a bottom recess 17. Two top water conduits 18 are in this embodiment of the pile moreover placed in the top recess 16 while a bottom water conduit 19 is placed in the bottom recess 17.

The conduits are formed with a number of bores, (not seen), which could have a diameter of about 0,8 mm and be placed with a mutual distance of about two meters.

The upper arrow 20 represents the feeding pipe 7, which during operation is feeding purifying water into the top water conduits 18 under a pressure higher than one bar.

That implies that the purifying water via the bores is ejected out of the of the top water conduits 18 in form of jets, (not seen), which partly are sprinkling the top of the pile with purifying water and partly form a basin of purifying water in the top recess 16. The ejected purifying water percolates downwards to the bottom of the pile.

The lower arrow 21 represents the return pipe 10, which is connected to the bottom water conduit 19 placed in the bottom recess 17: The pressure in the return pipe 10 is lower than one bar whereby the percolated purifying water, which via the bores has penetrated into the bottom water conduit 19, is evacuated.

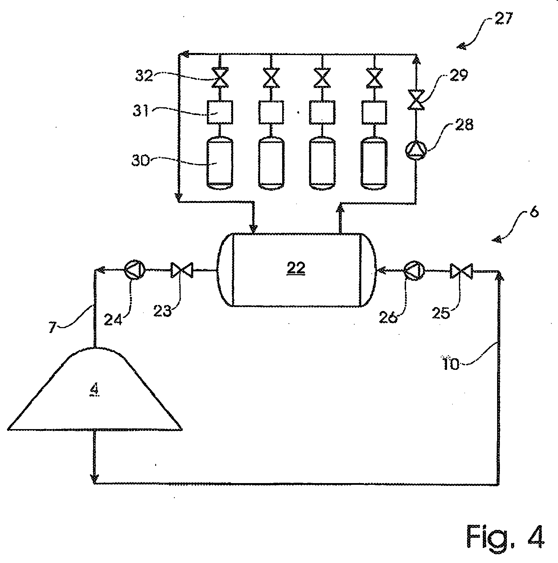

Fig. 4 is a diagram of a first embodiment of the circuit 6 shown in fig. 1.

The circuit 6 comprises a water tank 22 with purifying water to be fed to the top of the pile 4 via the feeding pipe 7 and to be evacuated from the bottom of the pile and returned to the water tank 22 via the return pipe 10.

In the feeding pipe 7 is inserted at stop valve 23 and a pump 24 for pumping purifying water from the water tank 22 through the feeding pipe 7 to the top of the pile 4 under a pressure higher than one bar.

In the return pipe 10 is moreover inserted a stop valve 25 and a pump 26 for evacuating the used purifying water from the bottom of the pile 4 via the return pipe 10 under a pressure which preferable is lower than one bar and returning the evacuated purifying water to the water tank 22.

It is to be understood that the differential pressure between the higher pressure in the feeding pipe and the lower pressure in the return pipe together with the gravitation causes the circulating of the purifying water through the pile.

By circulating the same purifying water more times through the pile 4 are obtained a reuse of the enriched water having that advantageous effect that the plant can be operated to a low and competitive cost.

The water tank 22 is also inserted in a second hydraulic circuit 27 in which a pump 28 and a stop valve 29 are inserted.

A number - in this case four - of containers 30 with purifying agents are connected in parallel to the second circuit 27 via each their dispenser 31 and stop valve 32.

Each of those agents has a specific effect on the contaminations of the soil of the pile. The agents from each container 30 therefore is introduced into the purifying water being circulated in the second circuit in a mix suited for destroying that specific characterized contaminations of the contaminated soil of the pile being treated at a given moment.

This process takes place by in turns or simultaneously activating the dispensers 31 and opening the valves 32 of the different containers 30 so that the required quantity of each of the agents is introduced in the purifying water contained in the water tank.

Fig, 5 is a diagram of a second embodiment of the circuit 6 corresponding in the main to the first embodiment shown in fig. 4 but with two water tanks 22 and 33 and two second circuits 27 and 34.

The water tank 22 is connected to the feeding pipe 7 of the circuit 6 via a connecting pipe 35 in which is inserted a stop valve 36 and a feeding pump 37 and to the return pipe 10 via another connecting pipe 38 with a stop valve 39.

The water tank 33 is connected to the feeding pipe 7 of the circuit 6 via a connecting pipe 40 in which is inserted a stop valve 41 and a pump 42 and to the return pipe 10 via another connecting pipe 43 with a stop valve 44.

In the feeding pipe 7 is moreover inserted a stop valve 45 at the top of the pile 4 and in the return pipe 10 another stop valve 46 and a return pump 47 at he bottom of the pile.

The stop valves 45 and 46 correspond to the valves 9 of the piles shown in fig. 1. A pile is coupled to the feeding line 7 of the first circuit 6 by opening the valves 45 and.46 and closing the valves of the other piles whereby this pile and only this one is treated with enriched purifying water circulating in the first circuit.

It is supposed that the water tank 22 has been connected to the circuit 6 by opening the associated stop valves 36 and 39 and activating the feeding pump 37 and that the water tank 33 at the same time has been disconnected from the circuit 6 by closing the associated stop valves 41 and 44 and deactivating the feeding pump 42.

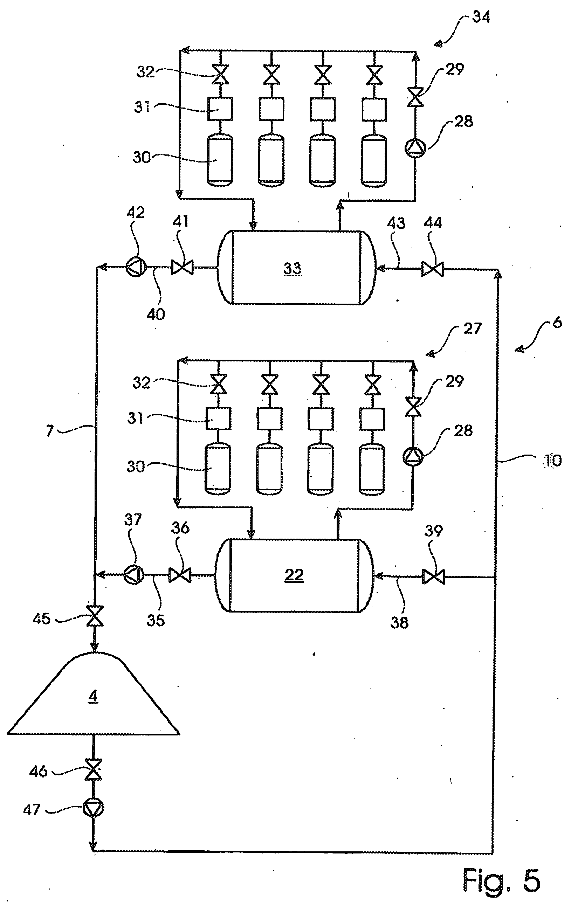

In this mode of operating the second embodiment of the circuit 6 shown in fig. 5 is it only purifying water from the water tank 22, which serves for purifying the contaminated soil in the pile 4 coupled to the feeding line 7 of the first circuit 6

Simultaneously are agents from the containers 30 introduced into the purifying water in the water tank 22 via the second circuit 27 in a mix suited for destroying just that characterised contaminations which exists in the soil of the pile 4 now being treated

During treating said pile 4 with purifying water from the water tank 22 is the water tank 33, as mentioned above, disconnected from the circuit 6. Agents from the containers 30 are anyhow introduced into the purifying water in the water tank 33 via the second circuit 34 in a mix suited for destroying those specific contaminations of the soil of the next pile to be treated.

By means of the second embodiment of the circuit 6 can the purifying treatment of another pile start immediately after finishing the purifying operation of the preceding pile without wasting any time.

It thereby is made possible to use every minute of the time available to treat contaminated soil with purifying water so that the plant thereby obtains a large capacity.

It is noted that the circuit also can be equipped with more than two second circuits, (not shown) for thereby achieving time enough for effectively being able to enrich the purifying water to be used to purify the associated pile.

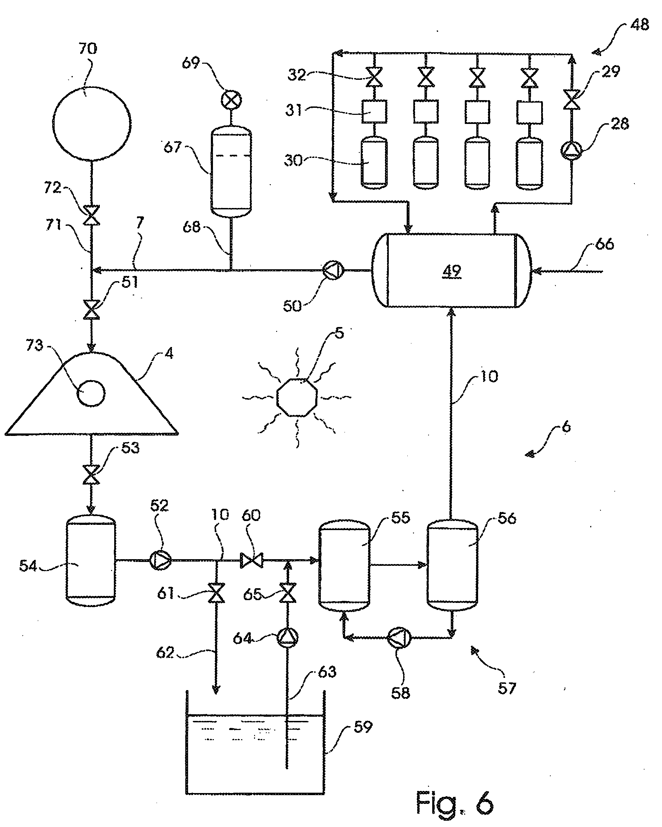

Fig. 6 is a diagram of a third embodiment of the circuit 6 shown in fig. 1.

In this embodiment is the circuit equipped with only one second circuit 48 for enriching the purifying water in the water tank 49. This second circuit corresponds to the second circuits 27 and 34, respectively shown in fig. 4 and 5.

The enriched purifying water in the water tank 49 is via the feeding pipe 7 fed to the top of the pile 4 by means of the feeding pump 50. In the feeding pipe 7 is before the pile 4 moreover inserted a stop valve 51.

The purifying water, which has percolated down through the pile 4 to the bottom of the pile, is via the return pipe 10 returned to the water tank 49 by means of a return pump 52. In the return pipe 10 is below the pile 4 inserted a stop valve 53.

The return pump 52 is adapted to generate a pressure lower than one bar whereby the used purifying water is evacuated to an evacuation tank 54.

In the return pipe 10 is furthermore inserted a buffer tank 55 and a biological purification unit 56 for removing possible organic impurities which the purifying water may have absorbed during percolating through the pile.

For securing that said organic impurities effectively is removed from the used purifying water is the third embodiment of the circuit of the invention equipped with a third hydraulic circuit 57 with a pump 58 for more times circulating the purifying water through both the buffer tank 55 and the biological purification unit 56.

With the reference mark 59 is denoted a reservoir of purifying water. By closing the valve 60 in the return pipe 10 and open the valve 61 in a discharge pipe 62 connected to the return pipe 10 can purifying water be discharged to the reservoir 59.

Water in the reservoir 59 can also be introduced back into the return pipe 10 of the circuit 6 via a introducing pipe 63 connected to the return pipe 10 by activating an introducing pump 64 inserted in the introducing pipe 63 and opening the stop valve 65 in said pipe 63.

By regulating the valves 60, 61 and 65 and pumps 52 and 64 in a suitable way can the used purifying water arriving to the water tank 49 via the return pipe 10 be mixed as desired with water from the reservoir 4.

Water from a waterworks (not seen) can moreover be added to the purifying water in the water tank 49 via a water pipe 66 connected to the waterworks.

For securing a smooth flow in the pipes of the circuit 6 during operating without any hammer blow, which could damage the piles, is a hydrophore 67 connected to the feeding pipe 7 via a connecting pipe 68.

A pressure switch 69, which is connected to the hydrophore 67, serves for securing that the pressure in said hydrophore constantly is kept to the pressure required for safely operating the circuit 6.

Purifying of contaminated soil requires that also oxygen is introduced into the purifying water.

The circuit 6 therefore comprises a source of oxygen 70, which is connected to the feeding pipe 7 via a connecting pipe 71 with a valve 72.

The source of oxygen 70 can be an oxygen bottle or an oxygen generator and the valve 72 be a reduction valve for reduction the pressure in the source of oxygen 70.

In the pile 4 is placed measuring instruments 73 for measuring the state of contamination of the soil of said pile.

Signals representing the measuring results is - in this case wireless - transmitted to the computer 5 which is programmed to calculate the mix of purifying agents which fits to effectively purifying the characterized contamination of the soil of the pile in question and transmitting signals representing this mix back as orders to the other second circuit 48 to accordingly enrich the purifying water in the water tank with precisely that mix.

Instruments, (not shown) is moreover comprised for measuring other conditions of the circuit such as the pressure in the feeding and returning pipes of the circuit, the velocity of the circulating and the level in the different tanks.

The computer is also programmed to, in agreement with the result of the measuring of those and other factors, to calculate the correct moment, sequence and duration for opening and closing the different stop valves of the circuit and transmit the results of the calculating back to the circuit 6 as signals representing the result of the calculating as orders to the different stop valves to open an close accordingly.

For performing the computer controlled operation of the circuit is each of the stop valves of the circuit operated by means of an electromagnet or a step motor.

The countless number of signals to be transmitted for safely operating the plant is according to the invention transmitted via the Internet whereby the plant can be monitored from a distant control centre (not shown) and to a low cost.

Above is described and on the drawing shown that only one pile is treated at a time. Within the scope of the invention can more piles however be simultaneously treated.

Also is above described and on the drawing shown that the first circuit is equipped with one tank of each kind only. Within the scope of the invention can the first circuit however be equipped with more tanks of each kind for thereby increasing the capacity of the plant.

The first circuit can for example comprise two or more water tanks for keeping a quantity of enriched water, which is large enough for treating a pile or treating more piles at the same time.

Furthermore is above described and on the drawing shown that the treating of a pile takes place by placing two water conduits with bores at top of the pile for introducing purifying water into the pile and one at the bottom of the pile for evacuating the used purifying water.

Within the scope of the invention can there however be more water conduits of that kind at the top and/or at the bottom of the pile and the conduits can also be of another kind, for example be drainpipes.

## Claims

1. A method of purifying contaminated soil having a contamination type utilizing a purification process, said method comprising the following steps:
i. determining the contamination type of said contaminated soil, and
ii. composing a first composition of enriched agent based on the result of the analysis in step i., and
iii. providing said enriched agent to said contaminated soil and allowing said enriched agent to percolate through said contaminated soil, and
iv. obtaining percolate, and
v. monitoring the progress and status of said purification process by sensors placed in the contaminated soil, wherein said sensors provides information regarding the temperature in the soil, the humidity in the soil, the CO₂ content in the soil, the oxygen level in the soil and
vi. composing a second composition of enriched agent based on the result of the analysis and providing said new batch of enriched agent to said contaminated soil, and
vii. repeating step iii.-vi. until the result of the analysis in step v. has reached a predetermined level, **characterized in that** said purification process is monitored using wire-less communication means and wherein the level of methane gas in the soil, and different Redox parameters in the soil, are provided through said sensors.

2. The method of claim 1, wherein the enriched agent comprises two or more elements selected from the group consisting of: water, oxygen, bacteria, nutrients, enzymes and detergent, such as water and bacteria, or such as water and one or more elements selected from the group consisting of: nutrients, enzymes, bacteria, oxygen, and detergent.

3. The method of claim 2, wherein the bacteria added to the enriched agent is selected from the group consisting of: *Rhodoccus erytropolis, Pseudomonas putida, Pseudomonas fluorescens, Arthrobacter* and *Sphingomonas,* and/or wherein the nutrients added to the enriched agent is selected from the group consisting of: nitrogen, phosphorous and potassium, and/or wherein the enzymes added to the enriched agent is selected from the group consisting of: proteases, amylases and lipases, and/or wherein the detergent added to the enriched agent is selected from the group consisting of: cationic detergent, anionic detergent, non-ionic detergent and zwitterionic detergent.

4. The method of claims 1-3, wherein the first composition of enriched agent is different from the second composition of enriched agent, and optionally wherein the second composition is either the same each time a new second composition is composed, or wherein the second composition is different each time a second composition is composed.

5. The method of claims 1-4, wherein the first and second composition comprises the same elements, but in different concentrations, and optionally wherein the second composition can comprise different concentrations each time a new second composition is composed.

6. The method of claims 1-5, wherein said purification process is controlled and monitored from a distance.

7. The method according to claims 1-6, wherein said method is performed at a plant for purifying contaminated soil, comprising a treating place (1) upon which the treating of the soil to be purified is carried out, **characterized in that** the plant comprises,
i. a number of piles (4), which are made of the contaminated soil and are placed on the treating place (1), and
ii. a first circuit (6) for by turns treating the piles (4) by circulating water enriched with purifying agents through the piles (4) in a mix suited for at least partly eliminating the specific contaminations of the soil of the pile (4) being treated at a given moment.

8. The method according to claim 7, wherein the first circuit (6) comprises,
i. at least one water tank (22, 33, 49) with water to be enriched
ii. a plurality of sources (30) of purifying agents, wherein optionally the plurality of sources of purifying agents are directly or indirectly connected to the at least one water tank, and
iii. means for introducing purifying agents into the water in the at least one water tank, such as dispensers (31) and where each dispenser (31) is adapted to introduce that quantity of agents which is required to enrich the water in the water tank (22, 33, 49) sufficiently for effectively treating the soil of the pile (4) being treated at a given moment.

9. A method according to claim 8, **characterized in that** the dispensers (31) are connected to a second circuit (27) for at a given moment circulating the water to be enriched through the water tank (22).

10. The method according to claims 7-9, wherein the first circuit (6) comprises,
i. a feeding pump (50) for via a feeding pipe (7) feeding enriched water from the water tank (49) to the top of the pile (4) being treated at a given moment,
ii. an evacuating pump (52) the used purifying water from the bottom of said pile (4) to at least one evacuation tank (54) and via a return pipe (10) returning the used purifying water from the at least one evacuation tank (54) to the at least one water tank.

11. The method according to claim 10, wherein the plant comprises a source (70) of oxygen connected to the feeding pipe (7) of the first circuit (6).

12. The method according to claims 7-11, wherein the first circuit (6) comprises,
i. two water tanks (22 and 33),
ii. two second circuits (27 and 34) connected to each their water tank (22 and 33) and to each of the dispensers (31) belonging to the respective plurality of sources (30) of purifying agents,
iii. that the water tanks (22 and 33) both are connected to a common first circuit (6), and
iv. that valves (39, 36 and 44, 41) are inserted in said first circuit (6) for in one valve mode allowing one of the water tanks (22) to circulate the enriched water from that water tank (22) through a pile (4) at a given moment, while the water in the other water tank (33) simultaneously is being enriched with purifying agents via the associated second circuit (34) for afterwards in another valve mode circulating the enriched water from the other water tank (33) through another pile (4).

13. The method according to claims 7-12, wherein the plant (2) comprises at least one buffer tank (55) and at least one biological purification unit (56) inserted in the return pipe (10) of the first circuit (6), and optionally the plant (2) comprises another second circuit (57) for at the same time circulating used purifying water through both the at least one buffer tank (55) and the at least one biological purification unit (56) inserted in the return pipe of the first circuit (6).

14. The method according to claims 7-13, wherein the plant (2) comprises an operating system for operating the plant (2) in accordance with signals received from measuring instruments (73) of the plant (2), and optionally wherein the measuring instruments (73) are placed in at least some of the number of piles (4) for measuring the specific kinds of contamination of soil of those piles (4), and that purifying agents are introduced into the water for purifying a specific pile (4) in agreement with the measuring results received from the measuring instruments (73) placed in that pile (4).

15. The method according to claims 7-14, wherein each of the piles (4) of contaminated soil are placed on a base (15), which is impermeable to water.

## Patentansprüche

1. Verfahren zur Reinigung kontaminierter Böden, die eine Kontaminationsart aufweisen, unter Verwendung eines Reinigungsprozesses, wobei das Verfahren folgende Schritte umfasst:
i. Bestimmen der Kontaminationsart des kontaminierten Bodens, und
ii. Herstellen einer ersten Zusammensetzung eines angereicherten Mittels auf Grundlage des Ergebnisses der Analyse in Schritt i., und
iii. Behandeln des kontaminierten Bodens mit dem angereicherten Mittel, wobei man das angereicherte Mittel durch den kontaminierten Boden sickern lässt, und
iv. Erhalten von Sickerwasser, und
v. Überwachen des Fortschritts und des Status des Reinigungsprozesses durch in dem kontaminierten Boden angeordnete Sensoren, wobei die Sensoren Informationen über die Temperatur im Boden, die Feuchtigkeit im Boden, den CO₂-Gehalt im Boden und den Sauerstoffgehalt im Boden bereitstellen, und
vi. Herstellen einer zweiten Zusammensetzung eines angereicherten Mittels auf Grundlage des Ergebnisses der Analyse und Behandeln des kontaminierten Bodens mit der neuen Charge von angereichertem Mittel, und
vii. Wiederholen der Schritte iii.-vi., bis das Ergebnis der Analyse in Schritt v. ein vorherbestimmtes Niveau erreicht hat, **dadurch gekennzeichnet, dass** der Reinigungsprozess unter Verwendung von drahtlosen Kommunikationsmitteln überwacht wird, und wobei der Methangasgehalt im Boden und verschiedene Redox-Parameter im Boden durch die Sensoren bereitgestellt werden.

2. Verfahren nach Anspruch 1, wobei das angereicherte Mittel zwei oder mehr Elemente umfasst, die ausgewählt sind aus der Gruppe bestehend aus: Wasser, Sauerstoff, Bakterien, Nährstoffen, Enzymen und Detergens, wie z. B. Wasser und Bakterien oder wie z. B. Wasser und eines oder mehrere Elemente, die ausgewählt sind aus der Gruppe bestehend aus: Nährstoffen, Enzymen, Bakterien, Sauerstoff und Detergens.

3. Verfahren nach Anspruch 2, wobei die Bakterien, die dem angereicherten Mittel beigefügt werden, ausgewählt sind aus der Gruppe bestehend aus: *Rhodococcus erythropolis*, *Pseudomonas putida, Pseudomonas fluorescens, Arthrobacter* und *Sphingomonas,* und/oder wobei die Nährstoffe, die dem angereicherten Mittel beigefügt werden, ausgewählt sind aus der Gruppe bestehend aus: Stickstoff, Phosphor und Kalium, und/oder wobei die Enzyme, die dem angereicherten Mittel beigefügt werden, ausgewählt sind aus der Gruppe bestehend aus: Proteasen, Amylasen und Lipasen, und/oder wobei das Detergens, das dem angereicherten Mittel beigefügt wird, ausgewählt ist aus der Gruppe bestehend aus: kationischem Detergens, anionischem Detergens, nichtionischem Detergens und zwitterionischem Detergens.

4. Verfahren nach den Ansprüchen 1-3, wobei sich die erste Zusammensetzung eines angereicherten Mittels von der zweiten Zusammensetzung eines angereicherten Mittels unterscheidet und wobei wahlweise die zweite Zusammensetzung entweder jedes Mal, wenn eine neue zweite Zusammensetzung hergestellt wird, die gleiche ist oder wobei die zweite Zusammensetzung jedes Mal, wenn eine zweite Zusammensetzung hergestellt wird, eine andere ist.

5. Verfahren nach den Ansprüchen 1-4, wobei die erste und die zweite Zusammensetzung die gleichen Elemente umfassen, jedoch in verschiedenen Konzentrationen, und wobei die zweite Zusammensetzung jedes Mal, wenn eine neue zweite Zusammensetzung hergestellt wird, wahlweise verschiedene Konzentrationen umfassen kann.

6. Verfahren nach den Ansprüchen 1-5, wobei der Reinigungsprozess aus einer Entfernung gesteuert und überwacht wird.

7. Verfahren nach den Ansprüchen 1-6, wobei das Verfahren in einer Anlage zur Reinigung kontaminierter Böden durchgeführt wird, die einen Behandlungsbereich (1) umfasst, in dem die Behandlung des zu reinigenden Bodens durchgeführt wird, **dadurch gekennzeichnet, dass** die Anlage Folgendes umfasst:
i. eine Anzahl von Haufen (4), die aus dem kontaminierten Boden bestehen und in dem Behandlungsbereich (1) angeordnet sind, und
ii. einen ersten Kreislauf (6) für die abwechselnd erfolgende Behandlung der Haufen (4), bei der mit Reinigungsmitteln angereichertes Wasser durch die Haufen (4) in einer Mischung zirkuliert wird, die dafür geeignet ist, wenigstens teilweise die spezifischen Kontaminationen des Bodens in dem Haufen (4), der zu einem gegebenen Zeitpunkt behandelt wird, zu beseitigen.

8. Verfahren nach Anspruch 7, wobei der erste Kreislauf (6) Folgendes umfasst:
i. wenigstens einen Wasserbehälter (22, 33, 49) mit anzureicherndem Wasser,
ii. eine Mehrzahl von Quellen (30) für Reinigungsmittel, wobei wahlweise die Mehrzahl von Quellen für Reinigungsmittel direkt oder indirekt mit dem wenigstens einen Wasserbehälter verbunden ist, und
iii. Mittel zum Zuführen von Reinigungsmitteln zu dem Wasser in dem wenigstens einen Wasserbehälter, wie z. B. Verteiler (31), und wobei jeder Verteiler (31) derart angepasst ist, dass er die Menge an Mitteln zuführt, die benötigt wird, um das Wasser in dem Wasserbehälter (22, 33, 49) ausreichend anzureichern, um den Boden in dem Haufen (4), der zu einem gegebenen Zeitpunkt behandelt wird, wirksam zu behandeln.

9. Verfahren nach Anspruch 8, **dadurch gekennzeichnet, dass** die Verteiler (31) mit einem zweiten Kreislauf (27) verbunden sind, um das anzureichernde Wasser zu einem gegebenen Zeitpunkt durch den Wasserbehälter (22) zu zirkulieren.

10. Verfahren nach den Ansprüchen 7-9, wobei der erste Kreislauf (6) Folgendes umfasst:
i. eine Zuführpumpe (50), um angereichertes Wasser aus dem Wasserbehälter (49) über eine Zuführleitung (7) der Spitze des Haufens (4), der zu einem gegebenen Zeitpunkt behandelt wird, zuzuführen,
ii. eine Evakuierpumpe (52), um das benutzte Reinigungswasser vom Boden des Haufens (4) zu wenigstens einem Evakuierungsbehälter (54) zu befördern und das benutzte Reinigungswasser über eine Rückführleitung (10) von dem wenigstens einen Evakuierungsbehälter (54) zu dem wenigstens einen Wasserbehälter zurückzuführen.

11. Verfahren nach Anspruch 10, wobei die Anlage eine Quelle (70) für Sauerstoff umfasst, die mit der Zuführleitung (7) des ersten Kreislaufs (6) verbunden ist.

12. Verfahren nach den Ansprüchen 7-11, wobei der erste Kreislauf (6) Folgendes umfasst:
i. zwei Wasserbehälter (22 und 33)
ii. zwei zweite Kreisläufe (27 und 34), verbunden mit jeweils einem eigenen Wasserbehälter (22 und 33) und mit jedem der Verteiler (31), die zu der jeweiligen Mehrzahl von Quellen (30) für Reinigungsmittel gehören,
iii. dass die Wasserbehälter (22 und 33) beide mit einem gemeinsamen ersten Kreislauf (6) verbunden sind, und
iv. dass Ventile (39, 36 und 44, 41) in den ersten Kreislauf (6) integriert sind, sodass einer der Wasserbehälter (22) bei einer Ventilstellung das angereicherte Wasser von diesem Wasserbehälter (22) zu einem gegebenen Zeitpunkt durch einen Haufen (4) zirkulieren kann, während das Wasser in dem anderen Wasserbehälter (33) gleichzeitig über den entsprechenden zweiten Kreislauf (34) mit Reinigungsmitteln angereichert wird, um danach bei einer anderen Ventilstellung das angereicherte Wasser aus dem anderen Wasserbehälter (33) durch einen anderen Haufen (4) zu zirkulieren.

13. Verfahren nach den Ansprüchen 7-12, wobei die Anlage (2) wenigstens einen Pufferbehälter (55) und wenigstens eine biologische Reinigungseinheit (56) umfasst, die in die Rückführleitung (10) des ersten Kreislaufs (6) integriert ist, und die Anlage (2) wahlweise einen weiteren zweiten Kreislauf (57) umfasst, der gleichzeitig benutztes Reinigungswasser sowohl durch den wenigstens einen Pufferbehälter (55) und die wenigstens eine biologische Reinigungseinheit (56), die in die Rückführleitung des ersten Kreislaufs (6) integriert ist, zirkuliert.

14. Verfahren nach den Ansprüchen 7-13, wobei die Anlage (2) ein Betriebssystem zum Betreiben der Anlage (2) gemäß Signalen umfasst, die von Messinstrumenten (73) der Anlage (2) empfangen werden, und wobei die Messinstrumente (73) wahlweise in wenigstens einigen aus der Anzahl von Haufen (4) angeordnet sind, um die spezifischen Kontaminationsarten der Böden in diesen Haufen (4) zu messen, und dem Wasser Reinigungsmittel beigefügt werden, um einen bestimmten Haufen (4) in Übereinstimmung mit den Messergebnissen, die von den in diesem Haufen (4) angeordneten Messinstrumenten (73) empfangen werden, zu reinigen.

15. Verfahren nach den Ansprüchen 7-14, wobei jeder der Haufen (4) aus kontaminiertem Boden auf einem Untergrund (15) angeordnet wird, der wasserundurchlässig ist.

## Revendications

1. Procédé d'épuration de sol contaminé possédant un type de contamination utilisant un procédé d'épuration, ledit procédé comprenant les étapes suivantes :
i. la détermination du type de contamination dudit sol contaminé, et
ii. la composition d'une première composition d'agent enrichi en fonction du résultat de l'analyse dans l'étape i., et
iii. la fourniture dudit agent enrichi audit sol contaminé et la percolation libre dudit agent enrichi à travers ledit sol contaminé, et
iv. l'obtention de percolat, et
v. la surveillance du progrès et de l'état dudit procédé d'épuration par des capteurs placés dans le sol contaminé, dans lequel lesdits capteurs fournissent des informations concernant la température dans le sol, l'humidité dans le sol, la teneur en CO₂ dans le sol, le niveau d'oxygène dans le sol, et
vi. la composition d'une seconde composition d'agent enrichi en fonction du résultat de l'analyse et la fourniture dudit nouveau lot d'agent enrichi audit sol contaminé, et
vii. la répétition des étapes iii. à vi. jusqu'à ce que le résultat de l'analyse dans l'étape v. ait atteint un niveau prédéterminé, **caractérisé en ce que** ledit procédé d'épuration est surveillé en utilisant des moyens de communication sans fil, et dans lequel le niveau de méthane gazeux dans le sol et différents paramètres Redox dans le sol sont fournis par l'intermédiaire desdits capteurs.

2. Procédé selon la revendication 1, dans lequel l'agent enrichi comprend deux ou plus éléments sélectionnés parmi le groupe constitué de : eau, oxygène, bactéries, nutriments, enzymes et détergent, tel que de l'eau et des bactéries, ou tel que de l'eau et un ou plusieurs éléments sélectionnés parmi le groupe constitué de : nutriments, enzymes, bactéries, oxygène, et détergent.

3. Procédé selon la revendication 2, dans lequel les bactéries ajoutées à l'agent enrichi sont sélectionnées parmi le groupe constitué de : *Rhodoccus erytropolis*, *Pseudomonas putida, Pseudomonas fluorescens, Arthrobacter* et *Sphingomonas,* et/ou dans lequel les nutriments ajoutés à l'agent enrichi sont sélectionnés parmi le groupe constitué de : azote, phosphore et potassium, et/ou dans lequel les enzymes ajoutés à l'agent enrichi sont sélectionnés parmi le groupe constitué de : protéases, amylases et lipases, et/ou dans lequel le détergent ajouté à l'agent enrichi est sélectionné parmi le groupe constitué de : détergent cationique, détergent anionique, détergent non ionique et détergent zwittérionique.

4. Procédé selon les revendications 1 à 3, dans lequel la première composition d'agent enrichi est différente de la seconde composition d'agent enrichi, et optionnellement dans lequel la seconde composition est la même à chaque fois qu'une nouvelle seconde composition est composée, ou dans lequel la seconde composition est différente à chaque fois qu'une seconde composition est composée.

5. Procédé selon les revendications 1 à 4, dans lequel les première et seconde compositions comprennent les mêmes éléments, mais en des concentrations différentes, et optionnellement dans lequel la seconde composition peut comprendre des concentrations différentes à chaque fois qu'une nouvelle seconde composition est composée.

6. Procédé selon les revendications 1 à 5, dans lequel ledit procédé d'épuration est commandé et surveillé de façon éloignée.

7. Procédé selon les revendications 1 à 6, dans lequel ledit procédé est réalisé dans une usine pour épurer un sol contaminé, comprenant un emplacement de traitement (1) sur lequel le traitement du sol destiné à être épuré est réalisé, **caractérisé en ce que** l'usine comprend,
i. un nombre de tas (4), qui sont faits du sol contaminé et sont placés sur l'emplacement de traitement (1), et
ii. un premier circuit (6) pour, tour à tour, traiter les tas (4) en faisant circuler de l'eau enrichie avec des agents d'épuration à travers les tas (4) dans un mélange approprié pour éliminer au moins partiellement les contaminations spécifiques du sol du tas (4) traité à un moment donné.

8. Procédé selon la revendication 7, dans lequel le premier circuit (6) comprend :
i. au moins un réservoir d'eau (22, 33, 49) avec de l'eau destinée à être enrichie,
ii. une pluralité de sources (30) d'agents d'épuration, dans lequel optionnellement la pluralité de sources d'agents d'épuration sont directement ou indirectement raccordées à l'au moins un réservoir d'eau, et
iii. des moyens pour introduire des agents d'épuration dans l'eau dans l'au moins un réservoir d'eau, tels que distributeurs (31) et où chaque distributeur (31) est adapté pour introduire la quantité d'agents qui est requise pour enrichir l'eau dans le réservoir d'eau (22, 33, 49) suffisante pour traiter efficacement le sol du tas (4) traité à un moment donné.

9. Procédé selon la revendication 8, **caractérisé en ce que** les distributeurs (31) sont raccordés à un second circuit (27) pour, à un moment donné, faire circuler l'eau destinée à être enrichie à travers le réservoir d'eau (22).

10. Procédé selon les revendications 7 à 9, dans lequel le premier circuit (6) comprend,
i. une pompe d'alimentation (50) pour, par l'intermédiaire d'un tuyau d'alimentation (7), fournir de l'eau enrichie du réservoir d'eau (49) au haut du tas (4) traité à un moment donné,
ii. une pompe d'évacuation (52) l'eau d'épuration utilisée du bas dudit tas (4) à au moins un réservoir d'évacuation (54) et par l'intermédiaire d'un tuyau de retour (10) renvoyer l'eau d'épuration utilisée de l'au moins un réservoir d'évacuation (54) à l'au moins un réservoir d'eau.

11. Procédé selon la revendication 10, dans lequel l'usine comprend une source (70) d'oxygène raccordée au tuyau d'alimentation (7) du premier circuit (6).

12. Procédé selon les revendications 7 à 11, dans lequel le premier circuit (6) comprend,
i. deux réservoirs d'eau (22 et 33),
ii. deux second circuits (27 et 34) raccordés à chacun de leurs réservoirs d'eau (22 et 33) et à chacun des distributeurs (31) appartenant à la pluralité respective de sources (30) d'agents d'épuration,
iii. que les réservoirs d'eau (22 et 33) sont tous les deux raccordés à un premier circuit commun (6), et
iv. que des valves (39, 36 et 44, 41) sont insérées dans ledit premier circuit (6) pour, dans un mode de valve, permettre à un des réservoirs d'eau (22) de faire circuler l'eau enrichie à partir de ce réservoir d'eau (22) à travers un tas (4) à un moment donné, alors que l'eau dans l'autre réservoir d'eau (33) est simultanément enrichie avec des agents d'épuration par l'intermédiaire du second circuit associé (34) pour, après cela, dans un autre mode de valve, faire circuler l'eau enrichie à partir de l'autre réservoir d'eau (33) à travers un autre tas (4).

13. Procédé selon les revendications 7 à 12, dans lequel l'usine (2) comprend au moins un réservoir tampon (55) et au moins une unité d'épuration biologique (56) insérée dans le tuyau de retour (10) du premier circuit (6), et optionnellement l'usine (2) comprend un autre second circuit (57) pour en même temps faire circuler de l'eau d'épuration utilisée à travers l'au moins un réservoir tampon (55) et l'au moins une unité d'épuration biologique (56) insérée dans le tuyau de retour du premier circuit (6).

14. Procédé selon les revendication 7 à 13, dans lequel l'usine (2) comprend un système d'exploitation pour faire fonctionner l'usine (2) conformément à des signaux reçus à partir d'instruments de mesure (73) de l'usine (2), et optionnellement dans lequel les instruments de mesure (73) sont placés dans au moins certains du nombre de tas (4) pour mesurer les types spécifiques de contamination de sol de ces tas (4), et des agents d'épuration sont introduits dans l'eau pour épurer un tas spécifique (4) conformément aux résultats de mesure reçus à partir des instruments de mesure (73) placés dans ce tas (4).

15. Procédé selon les revendications 7 à 14, dans lequel chacun des tas (4) de sol contaminé sont placés sur une base (15), qui est imperméable à l'eau.
